# EUROPEAN PATENT APPLICATION

(11) **EP 4 841 743 A1**
(43) Date of publication of application: **18.11.2026**
(21) Application number: 25738516.1
(22) Date of filing: 09.01.2025
(51) Int. Cl.: H01M 10/0587, H01M 50/586, H01M 50/593

(54) **CELL AND SECONDARY BATTERY**

(30) Priority: 12.01.2024 CN 202410050912
(71) Applicant: NingDe Amperex Technology Limited, Ningde City, Fujian 352100 (CN)
(72) Inventor: WANG, Le, Ningde, Fujian 352100 (CN)
(74) Representative: Kraus & Lederer PartGmbB
(86) International application number: PCT/CN2025/071552
(87) International publication number: WO 2025/148988

(57) **Abstract**

This application relates to the technical field of energy storage, and in particular, to a battery cell and a secondary battery. The battery cell includes a first electrode plate, a second electrode plate, a separator, and a first insulation piece. A polarity of the second electrode plate is opposite to a polarity of the first electrode plate. The separator is disposed between the first electrode plate and the second electrode plate. The first electrode plate, the separator, and the second electrode plate are wound along a winding direction to form an electrode assembly. Along the winding direction, the first electrode plate includes a first winding start section located on a first layer at an innermost turn of the electrode assembly. The first winding start section includes a first winding start end. The first insulation piece is disposed on both sides of a part of the first winding start section, and extends beyond the first winding start end along a first direction. A part extending beyond is a first portion of the first insulation piece. The first direction is a length direction of the first electrode plate. The first portion can block the burrs of the first electrode plate at the first winding start end to protect the separator between the first electrode plate and the second electrode plate and improve the safety of the battery cell.

## Description

### TECHNICAL FIELD

This application relates to the technical field of an energy storage, and in particular, to a battery cell and a secondary battery.

### BACKGROUND

A secondary battery includes a battery cell and an electrolyte solution. The battery cell includes a second electrode plate, a first electrode plate, and a separator. The secondary battery works primarily by shuttling metal ions between the secondary electrode plate and the first electrode plate. Winding is a key step in a manufacturing process of a battery. That is because the winding process is highly integrative and makes the appearance of the battery take shape. Therefore, the winding process plays the role of a hub of the battery manufacturing process. During the winding of the electrode plate, because an electrode plate is generally cut off by a cutter, relatively large burrs are generated in this process, thereby making the electrode plate prone to pierce the separator at the start end and cause a short circuit.

### SUMMARY

In view of this, this application provides a battery cell and a secondary battery to alleviate the problem that an electrode plate pierces a separator at a start end.

According to a first aspect, an embodiment of this application provides a battery cell. The battery cell includes a first electrode plate, a second electrode plate, a separator, and a first insulation piece. A polarity of the second electrode plate is opposite to a polarity of the first electrode plate. The separator is disposed between the first electrode plate and the second electrode plate. The first electrode plate, the separator, and the second electrode plate are wound along a winding direction to form an electrode assembly. Along the winding direction, the first electrode plate includes a first winding start section located on a first layer at an innermost turn of the electrode assembly. The first winding start section includes a first winding start end. The first insulation piece is disposed on both sides of a part of the first winding start section, and extends beyond the first winding start end along a first direction. A part extending beyond is a first portion of the first insulation piece. The first direction is a length direction of the first electrode plate.

In the above battery cell, the first electrode plate, the second electrode plate, and the separator are wound along the winding direction to form an electrode assembly. The part of the first electrode plate, which is located on the first layer at the innermost turn of the electrode assembly, is the first winding start section. Before the winding process, the first electrode plate is usually cut off by a cutter. In this process, burrs are prone to be generated at an end of the first electrode plate. The burrs are prone to cause the first electrode plate to pierce the separator at the first winding start end and cause a short circuit in the battery cell. The first insulation piece is disposed on both sides of a part of the first winding start section, and along the length direction of the first electrode plate, the first winding start section includes a first winding start end. The first insulation piece extends beyond the first winding start end. The part extending beyond is the first portion of the first insulation piece. The first portion can block the burrs of the first electrode plate at the first winding start end to protect the separator between the first electrode plate and the second electrode plate, thereby alleviating the problem that the electrode plate pierces the separator at the start end, and improving the safety of the battery cell.

In one or more embodiments, the first winding start section is provided with a notch. The first insulation pieces at least partially cover the notch and are bonded to each other at the notch.

In the above battery cell, a notch is provided at the first winding start section. On the one hand, the notch can help mark the first winding start section of the first electrode plate during the winding, thereby making it convenient to affix the first insulation piece at the first winding start section, and making it convenient to start winding from the first winding start section provided with the notch. On the other hand, the first insulation pieces provided on both sides of the first winding start section can be bonded to each other at the notch after covering the notch, thereby increasing the bonding strength between the two first insulation pieces.

In one or more embodiments, a length of the first portion is C mm, satisfying: 30 ≥ C ≥ 1.5.

In the above battery cell, the length of the first portion is greater than or equal to 1.5 mm, thereby increasing the bonding strength between the first insulation piece and the first electrode plate, and improving the bonding firmness. At the same time, the length of the first portion is less than or equal to 30 mm, thereby reducing the length of the first insulation piece while achieving the desirable bonding strength, alleviating the problem of bending of the first portion, and improving the safety of the battery cell without impairing the energy density of the battery cell.

In one or more embodiments, along the winding direction, the second electrode plate includes a second winding start section located on the first layer at the innermost turn of the electrode assembly. A length of the second winding start section is B mm, a length of the first winding start section is A mm, and a length of the first portion is C mm, satisfying: 5 ≥ B - A ≥ C.

In the above battery cell, along the winding direction, the length of the second winding start section is greater than the length of the first winding start section. The length by which the second winding start section extends beyond the first winding start section is greater than or equal to the length of the first portion of the first insulation piece and is not greater than 5 mm. In this way, after the first electrode plate, the separator, and the second electrode plate are wound along the winding direction to form an electrode assembly, the hollow area of the second electrode plate in the thickness direction of the battery cell is reduced, thereby alleviating the lithium plating at the start end of the second electrode plate.

In one or more embodiments, along the winding direction, a length of the first winding start section is A mm, a length of the first portion is C mm, and a width of the electrode assembly is W mm, satisfying: C + A ≤ W.

In the above battery cell, along the winding direction, the sum of the length of the first winding start section and the length of the first portion is less than or equal to the width of the electrode assembly, thereby reducing the probability of folding of the first insulation piece due to an excessive length in the innermost layer of the wound electrode assembly. The first insulation piece remains in a single-layer structure, thereby reducing the impact of the first insulation piece on the overall thickness of the electrode assembly.

In one or more embodiments, the first insulation piece further includes a second portion. The second portion is a part, bonded to the first winding start section, of the first insulation piece. A length of the second portion is D mm, and a length of the first portion is C mm, satisfying: 10C ≥ D ≥ 3C.

In the above battery cell, the length of the part, bonded to the first winding start section, of the first insulation piece is greater than or equal to 3 times the length of the part by which the first insulation piece extends beyond the first winding start section along the winding direction, and is less than or equal to 10 times the length of the part by which the first insulation piece extends beyond the first winding start section along the winding direction, thereby improving the stability of bonding between the first insulation piece and the first winding start section.

In one or more embodiments, the first electrode plate includes a first current collector and active material layers disposed on both sides of the first current collector. Along a thickness direction of the first winding start section, a thickness of the first insulation piece is E µm, a thickness of the first current collector is F µm, and a thickness of the separator is G µm, satisfying: E + G ≥ 3F.

In the above battery cell, before winding, the first electrode plate usually needs to be pre-cut with a cutter. During the cutting, burrs are generated on the cut edge of the first current collector. The size of the burrs is usually 2 to 3 times the thickness of the first current collector. The sum of the thicknesses of the first insulation piece and the separator is set to 3 times the thickness of the first current collector, so that the burrs on the edge of the first current collector can be effectively blocked by the first insulation piece and the separator, thereby alleviating the problem of contact shorting between the positive electrode and the negative electrode caused when the burrs on the edge of the first current collector pierce the separator, and improving the safety of the battery cell.

In one or more embodiments, 20 ≤ E ≤ 60.

In the above battery cell, the thickness of the first insulation piece is set to be greater than 20 µm and less than 60 µm. In this way, when the first insulation piece is affixed to the first winding start section, the impact caused by the thickness of the first insulation piece onto the thickness of the innermost layer of the wound electrode assembly is reduced.

In one or more embodiments, the first insulation piece further includes a third portion. The third portion is a part by which the first insulation piece extends beyond the first winding start end along a third direction. The third direction is a width direction of the first electrode plate, and a length of the third portion along the third direction is K mm, satisfying: K ≤ 2.

In the above battery cell, the length of the part by which the first insulation piece extends beyond the first winding start end along the width direction of the first electrode plate is less than or equal to 3 mm. In this way, along the width direction of the first electrode plate, the first insulation piece can block the end of the first electrode plate in the width direction to protect the separator between the first electrode plate and the second electrode plate, thereby alleviating the problem that the electrode plate pierces the separator at the start end, and improving the safety of the battery cell.

In one or more embodiments, the first insulation piece includes a first bonding layer and an isolation layer. The first bonding layer is disposed on one side, close to the first winding start section, of the isolation layer. The first insulation piece is bonded and fixed to the first winding start section by the first bonding layer.

In the above battery cell, the first insulation piece is bonded and fixed to the first winding start section by the first bonding layer. The first bonding layer plays a connecting role, and the isolation layer plays a protective role. The isolation layer is configured to contact the burrs on the cut edge of the first current collector to isolate the first electrode plate from the separator. The first bonding layer fixes the isolation layer through a bonding force.

In one or more embodiments, the first insulation piece includes a first bonding layer, an isolation layer, and a second bonding layer. The second bonding layer is disposed on one side, away from the first winding start section, of the isolation layer. The first insulation piece is bonded and fixed to the separator by the second bonding layer.

In the above battery cell, the second bonding layer is disposed on one side, away from the first winding start section, of the isolation layer. In this way, both sides of the first insulation piece are sticky. The first insulation piece is bonded and fixed to the separator by the second bonding layer, so that the position of the first insulation piece is fixed.

In one or more embodiments, the first insulation piece is a hot-melt adhesive.

In the above battery cell, the hot-melt adhesive is a malleable binder. The physical status of the hot-melt adhesive changes with temperature within a specified temperature range without changing chemical properties. With the hot-melt adhesive, the fixing relationship between the first insulation piece and the first electrode plate is more firmly secured.

In one or more embodiments, no blank foil region is provided in the first winding start section.

In the above battery cell, no blank foil region is provided in the first winding start section. In this way, in the innermost layer of the wound electrode assembly, the reaction area of the first winding start section is sufficient. In addition, the absence of the blank foil region in the first winding start section can make the bonding surface of the first insulation piece flat and even, thereby improving the bonding stability of the first insulation piece.

In one or more embodiments, the battery cell further includes a second insulation piece. Along the winding direction, the first electrode plate further includes a first winding termination section located at a termination end of an outermost turn of the electrode assembly. The second insulation piece is affixed on both sides of the first winding termination section. The first winding termination section includes a first winding termination end. The second insulation piece extends beyond the first winding termination end along the first direction.

In the above battery cell, the first electrode plate, the second electrode plate, and the separator are wound along the winding direction to form an electrode assembly. The part of the first electrode plate, which is located at the termination end of the outermost turn of the electrode assembly, is the first winding termination section. Before the winding process, the first electrode plate is usually cut off by a cutter. In this process, burrs are prone to be generated at an end of the first electrode plate. The burrs are prone to cause the first electrode plate to pierce the separator at the first winding termination end and cause a short circuit in the battery cell. The second insulation piece is disposed on both sides of the first winding termination section. Along the length direction of the first electrode plate, the first winding termination section includes the first winding termination end. The second insulation piece extends beyond the first winding termination end. The second insulation piece can block the burrs of the first electrode plate at the first winding termination end to protect the separator between the first electrode plate and the second electrode plate, thereby alleviating the problem that the electrode plate pierces the separator at the termination end, and improving the safety of the battery cell.

In one or more embodiments, the second insulation piece includes a termination portion. The termination portion is a part by which the second insulation piece extends beyond the first winding termination end along the first direction. A length of the termination portion along the first direction is P mm. Along the winding direction, the second electrode plate includes a second winding termination section. A length of the second winding termination section is N mm, and a length of the first winding termination section is M mm, satisfying: N - M ≥ P.

In the above battery cell, along the winding direction, the length of the second winding termination section is greater than the length of the first winding termination section. The length by which the second winding termination section extends beyond the first winding termination section is greater than or equal to the length of the termination portion of the second insulation piece. In this way, after the first electrode plate, the separator, and the second electrode plate are wound along the winding direction to form an electrode assembly, the ion intercalation space of the second electrode plate is increased, thereby alleviating the lithium plating of the second electrode plate, and improving the capacity and charge-and-discharge performance of the battery cell.

In one or more embodiments, the isolation layer includes a layer formed by at least one of: polyolefin, polyacrylonitrile, polyol ester, polyamide, polyurethane, polyethylene terephthalate, and a composite containing at least one of the polyolefin, the polyacrylonitrile, the polyol ester, the polyamide, the polyurethane, or the polyethylene terephthalate.

The first bonding layer and/or the second bonding layer includes a layer formed by at least one of: polyolefin, polyurethane, polyacrylate, organosilicon, rubber, and a composite containing at least one of the polyolefin, the polyurethane, the polyacrylate, the organosilicon, or the rubber.

In the above battery cell, the isolation layer includes a layer formed by at least one of: polyolefin, polyacrylonitrile, polyol ester, polyamide, polyurethane, polyethylene terephthalate, and a composite containing at least one of the polyolefin, the polyacrylonitrile, the polyol ester, the polyamide, the polyurethane, or the polyethylene terephthalate. Such materials are polymer materials with good mechanical properties and electrical insulation properties, and are of relatively high chemical stability. The first bonding layer and/or the second bonding layer includes a layer formed by at least one of the following: polyolefin, polyurethane, polyacrylate, organosilicon, rubber, and a composite containing at least one of the polyolefin, the polyurethane, the polyacrylate, the organosilicon, or the rubber. Such substances used as materials of the first bonding layer and/or the second bonding layer are highly penetrative, and provide high bonding strength after polymerization.

According to a second aspect, an embodiment of this application provides a secondary battery. The secondary battery includes the battery cell disclosed in any one of the above embodiments.

By containing the above battery cell, the secondary battery can alleviate the problem that the electrode plate of the battery cell pierces the separator at the start end, thereby improving the safety of the secondary battery.

### BRIEF DESCRIPTION OF DRAWINGS

FIG. 1 is a schematic diagram of an overall structure of a secondary battery according to an embodiment of this application;
FIG. 2 is a schematic diagram of a disassembled structure of a secondary battery according to an embodiment of this application;
FIG. 3 is a schematic diagram of a cross-section of a jelly-roll structure of a battery cell according to an embodiment of this application, where the cross-section is obtained by sectioning along an III-III line shown in FIG. 2;
FIG. 4 is a schematic diagram of a fixing relationship between a first winding start section and a first insulation piece according to an embodiment of this application;
FIG. 5 is a schematic top view of a fixing relationship between a first winding start section and a first insulation piece according to an embodiment of this application;
FIG. 6 is a schematic diagram of a layered structure of a first insulation piece according to an embodiment of this application; and
FIG. 7 is a schematic diagram of a fixing relationship between a first winding termination section and a second insulation piece according to an embodiment of this application.

### List of reference numerals:

- 100: secondary battery
- 200: battery cell
- 210: first electrode plate
- 211: first winding start section
- 2111: first winding start end
- 2112: notch
- 212: first current collector
- 213: active material layer
- 214: first winding termination section
- 2141: first winding termination end
- 220: second electrode plate
- 221: second winding start section
- 230: separator
- 240: first insulation piece
- 241: first portion
- 242: second portion
- 243: third portion
- 244: first bonding layer
- 245: isolation layer
- 246: second bonding layer
- 250: second insulation piece
- 251: termination portion
- R: winding direction
- X: first direction
- Y: second direction
- Z: third direction
- 300: tab
- 400: housing

### DETAILED DESCRIPTION

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. A person of ordinary skill in the art is able to understand the specific meanings of the terms in this application according to specific situations. The term "and/or" used herein includes any and all combinations of one or more relevant items enumerated.

Unless otherwise defined, all technical and scientific terms used herein bear the same meanings as what is normally understood by a person skilled in the technical field of this application. The terms used in the specification of this application are merely intended to describe specific embodiments but not to limit this application. The terms "include" and "comprise" and any variations thereof used in the specification, claims, and brief description of drawings of this application are intended to cover a non-exclusive inclusion.

In the description of embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

The term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane.

It is hereby noted that a parameter described as being greater than, equal to, or less than a specified endpoint value means that the endpoint value allows for a tolerance of ±10%. For example, the statement that A is greater than B by 10 covers the case that A is greater than B by 9 and the case that A is greater than B by 11.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. To the extent that no conflict occurs, different embodiments of this application may be combined with each other.

It is hereby noted that, dimensions such as thickness, length, and width of various components in some embodiments of this application shown in the drawings, and dimensions such as overall thickness, length, and width of an integrated device are merely illustrative descriptions, but do not constitute any limitation on this application.

An embodiment of this application provides a battery cell. The battery cell includes a first electrode plate, a second electrode plate, a separator, and a first insulation piece. A polarity of the second electrode plate is opposite to a polarity of the first electrode plate. The separator is disposed between the first electrode plate and the second electrode plate. The first electrode plate, the separator, and the second electrode plate are wound along a winding direction to form an electrode assembly. Along the winding direction, the first electrode plate includes a first winding start section located on a first layer at an innermost turn of the electrode assembly. The first winding start section includes a first winding start end. The first insulation piece is disposed on both sides of a part of the first winding start section, and extends beyond the first winding start end along a first direction. A part extending beyond is a first portion of the first insulation piece. The first direction is a length direction of the first electrode plate.

In the above battery cell, the first electrode plate, the second electrode plate, and the separator are wound along the winding direction to form an electrode assembly. The part of the first electrode plate, which is located on the first layer at the innermost turn of the electrode assembly, is the first winding start section. Before the winding process, the first electrode plate is usually cut off by a cutter. In this process, burrs are prone to be generated at an end of the first electrode plate. The burrs are prone to cause the first electrode plate to pierce the separator at the first winding start end and cause a short circuit in the battery cell. The first insulation piece is disposed on both sides of a part of the first winding start section, and along the length direction of the first electrode plate, the first winding start section includes a first winding start end. The first insulation piece extends beyond the first winding start end. The part extending beyond is the first portion of the first insulation piece. The first portion can block the burrs of the first electrode plate at the first winding start end to protect the separator between the first electrode plate and the second electrode plate, thereby alleviating the problem that the electrode plate pierces the separator at the start end, and improving the safety of the battery cell.

The following describes some embodiments of this application in detail with reference to drawings.

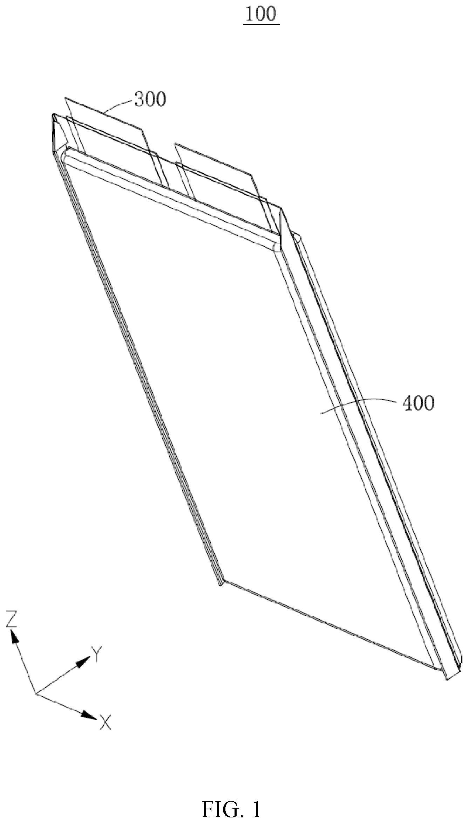

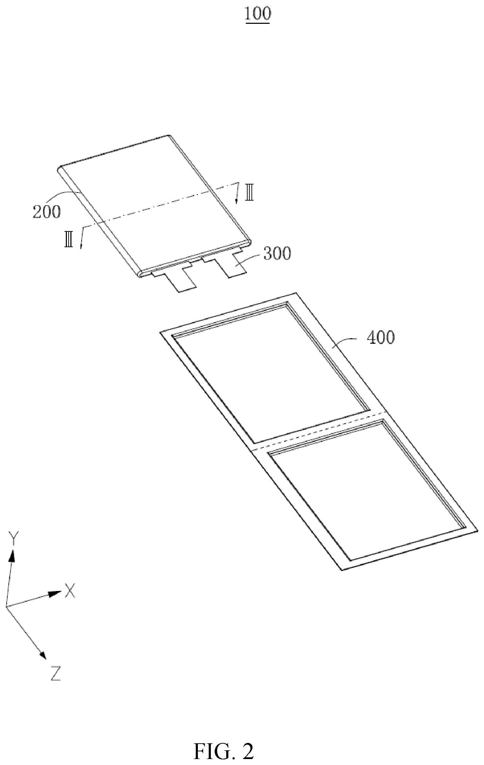

Referring to FIG. 1 and FIG. 2, an embodiment of this application provides a secondary battery 100, including a battery cell 200, a tab 300, and a housing 400. The battery cell 200 assumes a jelly-roll structure. The battery cell 200 and the tab 300 are accommodated in the housing 400. The tab 300 is electrically connected to the battery cell 200 and partially extends out of the housing 400. It is defined that a first direction X is a width direction of the secondary battery 100 and the battery cell 200, a second direction Y is a thickness direction of the secondary battery 100 and the battery cell 200, and a third direction Z is a length direction of the secondary battery 100 and the battery cell 200. The first direction X, the second direction Y, and the third direction Z are perpendicular to each other.

In some embodiments, the housing 400 may be an aluminum laminated film.

In some embodiments, an electrolyte solution is injected in the housing 400. Constituents of the electrolyte solution include a solvent, a lithium salt, and an additive. The solvent may be a cyclic carbonate ester (PC, EC), a chain carbonate ester (DEC, DMC, EMC), a carboxylate ester (MF, MA, EA, MP), other organic solvents, or a combination thereof. The lithium salt may be LiPF₆, LiBF₄, LiClO₄, LiB(C₆H), LiCH₃SO₃, LiCF₃SO₃LiN(SO₂CF₃)₂, LiC(SO₂CF₃)₃, LiBOB, or the like.

It is hereby noted that after the battery cell 200 is wound, the battery cell 200 usually needs to be hot-pressed to make the jelly-roll structure more tightly wound and formed. Subsequently, the battery cell 200 is placed in the housing 400, and an electrolyte solution is injected into the housing. Understandably, in order to make the drawings clearer, the electrolyte solution is omitted in FIG. 2.

In the related technical means, before the winding process, the first electrode plate 210 is usually cut off by a cutter. In this process, burrs are prone to be generated at an end of the first electrode plate 210. The burrs are prone to cause the first electrode plate 210 to pierce the separator 230 at the first winding start end 2111 and cause a short circuit in the battery cell 200.

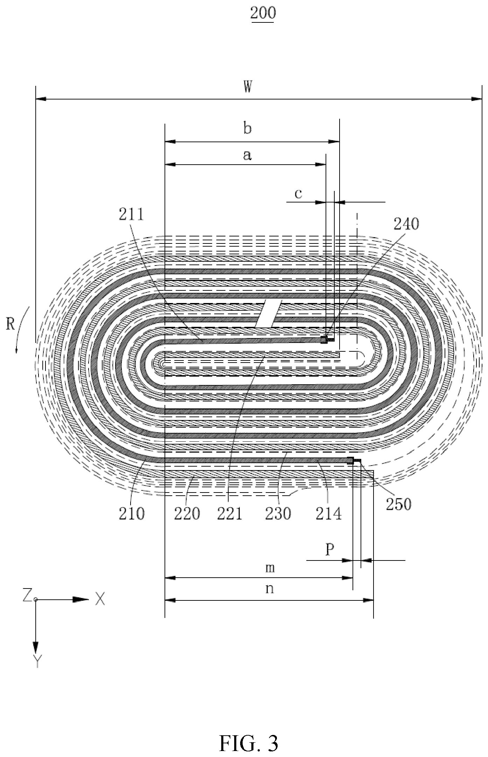

Referring to FIG. 3, an embodiment of this application provides a battery cell 200. The battery cell includes a first electrode plate 210, a second electrode plate 220, a separator 230, and a first insulation piece 240. The polarity of the second electrode plate 220 is opposite to the polarity of the first electrode plate 210. The separator 230 is disposed between the first electrode plate 210 and the second electrode plate 220. The first electrode plate 210, the separator 230, and the second electrode plate 220 are wound along a winding direction R to form an electrode assembly.

In some embodiments, the first electrode plate 210 is a positive electrode plate, and the second electrode plate 220 is a negative electrode plate.

In some embodiments, along the winding direction R, the first electrode plate 210 includes a first winding start section 211 located on a first layer at an innermost turn of the electrode assembly. The first winding start section 211 includes a first winding start end 2111.

It is worth noting that the first electrode plate 210 includes straight sections and an arcuate section during the winding. The extension direction of the length of the straight section is substantially parallel to the first direction X. A plurality of straight sections are stacked along a second direction Y. The arcuate section connects two straight sections in front and behind along the winding direction R. The first winding start section 211 is the first layer part of the first electrode plate 210 at the innermost turn of the electrode assembly, and specifically, is the straight section of the innermost turn. The first electrode plate 210 at the innermost turn of the electrode assembly means a turn of the first electrode plate 210 that is closest to the central winding axis of the electrode assembly.

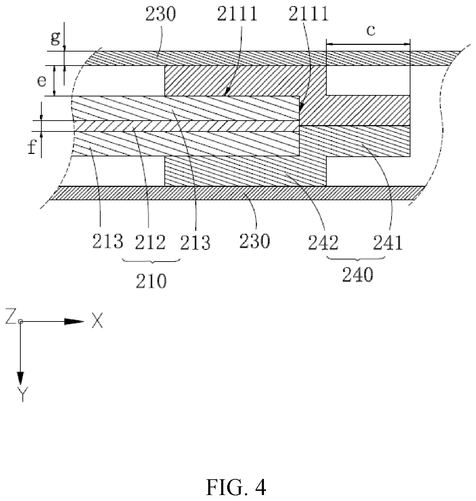

Referring to FIG. 3 and FIG. 4, in some embodiments, the first electrode plate 210 includes a first current collector 212 and active material layers 213 disposed on both sides of the first current collector 212. Along a thickness direction of the first winding start section 211, the thickness of the first insulation piece 240 is E µm, the thickness of the first current collector 212 is F µm, and the thickness of the separator 230 is G µm, satisfying: E + G ≥ 3F. In a process of cutting the first current collector 212, burrs are generated on the cut edge of the first current collector 212. The size of the burrs is usually 2 to 3 times the thickness of the first current collector 212. The sum of the thicknesses of the first insulation piece 240 and the separator 230 is set to 3 times the thickness of the first current collector 212, so that the burrs on the edge of the first current collector 212 can be effectively blocked by the first insulation piece 240 and the separator 230, thereby alleviating the problem of contact shorting between the positive electrode and the negative electrode caused when the burrs on the edge of the first current collector 212 pierce the separator 230, and improving the safety of the battery cell 200.

In some embodiments, 20 ≤ E ≤ 60. The thickness of the first insulation piece 240 is set to be greater than 20 µm and less than 60 µm. In this way, when the first insulation piece 240 is affixed to the first winding start section 211, the impact caused by the thickness of the first insulation piece 240 onto the thickness of the innermost layer of the wound electrode assembly is reduced, where the thickness of the innermost layer of the wound electrode assembly means a total thickness of the first electrode plate 210 and the first insulation piece 240.

The first insulation piece 240 is disposed on both sides of a part of the first winding start section 211, and extends beyond the first winding start end 2111 along the first direction X. A part extending beyond the first winding start end 2111 is a first portion 241 of the first insulation piece 240. The first direction X is the length direction of the first electrode plate 210, and is also the width direction of the battery cell 200. The first insulation piece 240 is disposed on both sides of the first winding start section 211, and the first portion 241 extends beyond the first winding start end 2111 along the first direction X, thereby blocking the burrs of the first electrode plate 210 at the first winding start end 2111 to protect the separator 230 between the first electrode plate 210 and the second electrode plate 220, thereby alleviating the problem that the electrode plate pierces the separator 230 at the start end, and improving the safety of the battery cell 200.

In some embodiments, along the winding direction R, the length of the first winding start section 211 is A mm, and the width of the electrode assembly is W mm, satisfying: C + A ≤ W. The sum of the length of the first winding start section 211 and the length of the first portion 241 is less than or equal to the width of the electrode assembly, thereby reducing the probability of folding of the first insulation piece 240 due to an excessive length of the first insulation piece 240 in the innermost layer of the wound electrode assembly. The first insulation piece 240 remains in a single-layer structure, thereby reducing the impact of the first insulation piece 240 on the overall thickness of the electrode assembly.

In some embodiments, the length of the first portion 241 is C mm, satisfying: 30 ≥ C ≥ 1.5. The length of the first portion 241 is greater than or equal to 1.5 mm, thereby increasing the bonding strength between the first insulation piece 240 and the first electrode plate 210, and improving the bonding firmness. At the same time, the length of the first portion 241 is less than or equal to 30 mm, thereby reducing the length of the first insulation piece 240 while achieving the desirable bonding strength, alleviating the problem of bending of the first portion 241, and improving the safety of the battery cell 200 without impairing the energy density of the battery cell 200.

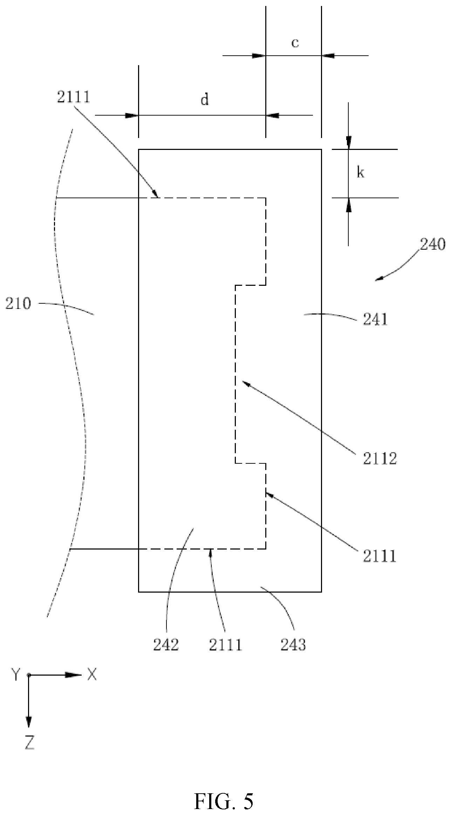

Referring to FIG. 4 and FIG. 5, in some embodiments, the first insulation piece 240 further includes a second portion 242 bonded to the first winding start section 211. In other words, the second portion 242 is a part, bonded to the first winding start section 211, of the first insulation piece 240. The length of the second portion 242 is D mm, satisfying: 10C ≥ D ≥ 3C. The length of the second portion 242 is greater than or equal to 3 times the length of the part by which the first insulation piece 240 extends beyond the first winding start section 211 along the winding direction R, and is less than or equal to 10 times the length of the part by which the first insulation piece 240 extends beyond the first winding start section 211 along the winding direction R, thereby improving the stability of bonding between the first insulation piece 240 and the first winding start section 211.

Referring to FIG. 5, in some embodiments, the first insulation piece 240 further includes a third portion 243 that extends beyond the first winding start end 2111 along a third direction Z. In other words, the third portion 243 is a part by which the first insulation piece 240 extends beyond the first winding start end 2111 along the third direction Z. The third direction Z is the width direction of the first electrode plate 210, and is also the length direction of the battery cell 200. The length of the third portion 243 along the third direction Z is K mm, satisfying: K ≤ 2. In this way, the first insulation piece 240 can block the widthwise end of the first electrode plate 210 along the width direction of the first electrode plate 210 to protect the separator 230 between the first electrode plate 210 and the second electrode plate 220, thereby alleviating the problem that the electrode plate pierces the separator 230 at the start end and improving the safety of the battery cell 200.

It is worth noting that the length of the third portion 243 along the third direction Z means the length by which the first insulation piece 240 extends beyond a single side of the first winding start end 2111 along the third direction Z. In other words, the first insulation piece 240 may include two third portions 243, and each first portion 241 extends beyond one side of the first winding start end 2111 along the third direction Z. The length of the third portion 243 on each side is less than or equal to 2 mm. Alternatively, the first insulation piece 240 may include one third portion 243, and the third part 243 extends beyond any side of the first winding start end 2111 along the third direction Z.

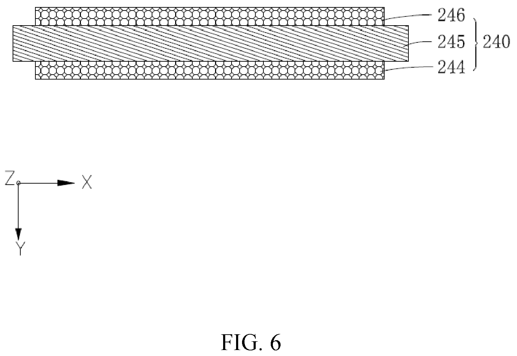

Referring to FIG. 3, FIG. 4, and FIG. 6, in some embodiments, the first insulation piece 240 includes a first bonding layer 244 and an isolation layer 245. The first bonding layer 244 is disposed one side, close to the first winding start section 211, of the isolation layer 245. The first insulation piece 240 is bonded and fixed to the first winding start section 211 by the first bonding layer 244. The first bonding layer 244 plays a connecting role, and the isolation layer 245 plays a protective role. The isolation layer 245 is configured to contact the burrs on the cut edge of the first current collector 212 to isolate the first electrode plate 210 from the separator 230. The first bonding layer 244 fixes the isolation layer 245 through a bonding force.

In some embodiments, the first insulation piece 240 further includes a second bonding layer 246. The second bonding layer 246 is disposed on one side, away from the first winding start section 211, of the isolation layer 245. The first insulation piece 240 is bonded and fixed to the separator 230 by the second bonding layer 246. Both sides of the first insulation piece 240 are sticky, so as to enhance the stability of the position of the first insulation piece 240.

In some embodiments, the first insulation piece 240 is a hot-melt adhesive. The hot-melt adhesive is a malleable binder. The physical status of the hot-melt adhesive changes with temperature within a specified temperature range without changing chemical properties. With the hot-melt adhesive, the fixing relationship between the first insulation piece 240 and the first electrode plate 210 is more firmly secured, thereby alleviating the problem of position change of the first insulation piece 240 of the battery cell 200. The hot-melt adhesive itself is solid, and can be conveniently packaged, transported, and stored. The hot-melt adhesive is solid at normal temperature, and becomes a flowable liquid of a specified viscosity when heated and melted to a specified temperature. The bonding strength of the hot-melt adhesive is high, thereby making it convenient to bond the first insulation adhesive to the first winding start section 211.

In some embodiments, a notch 2112 is provided at the first winding start section 211. The notch 2112 can help mark the first winding start section 211 of the first electrode plate 210 during the winding, thereby making it convenient to affix the first insulation piece 240 at the first winding start section, and making it convenient to start winding from the first winding start section 211 provided with the notch 2112. The notch 2112 is located at the first winding start end 2111 disposed along the first direction X. The first insulation pieces 240 at least partially cover the notch 2112 and are bonded to each other at the notch 2112. In other words, in the first insulation pieces 240 affixed to both sides of the first winding start section 211, the two first portions 241 are bonded to each other, the two third portions 243 are bonded to each other, and the two second portions 242 are bonded to each other through the notch 2112, thereby increasing the bonding strength between the two first insulation pieces 240.

In some embodiments, no blank foil region is provided in the first winding start section 211. In this way, in the innermost layer of the wound electrode assembly, the reaction area of the first winding start section 211 is sufficient. In addition, the absence of the blank foil region in the first winding start section 211 can make the bonding surface of the first insulation piece 240 flat and even, thereby improving the bonding stability of the first insulation piece 240.

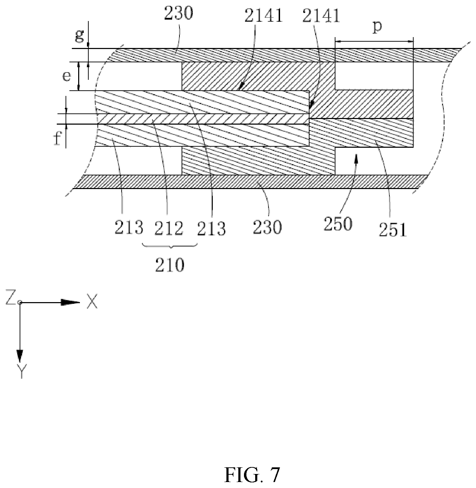

Referring to FIG. 3 and FIG. 7, in some embodiments, the battery cell 200 further includes a second insulation piece 250. Along the winding direction R, the first electrode plate 210 further includes a first winding termination section 214 located at the end of the outermost turn of the electrode assembly. The first electrode plate 210 at the outermost turn of the electrode assembly means a turn of the first electrode plate 210 that is farthest away from the central winding axis of the electrode assembly.

The second insulation piece 250 is affixed on both sides of the first winding termination section 214. The first winding termination section 214 includes a first winding termination end 2141. The second insulation piece 250 extends beyond the first winding termination end 2141 along the first direction X. The first winding termination end 2141 also leaves burrs after being cut off by a cutter. Therefore, the burrs are prone to cause the first electrode plate 210 to pierce the separator 230 at the first winding start end 2141, lead to conduction between the first electrode plate 210 and the second electrode plate 220, and cause a short circuit in the battery cell 200. The second insulation piece 250 is disposed on both sides of the first winding termination section 214. Along the length direction of the first electrode plate 210, the first winding termination section 214 includes the first winding termination end 2141. The second insulation piece 250 extends beyond the first winding termination end 2141. The second insulation piece 250 can block the burrs of the first electrode plate 210 at the first winding termination end 2141 to protect the separator 230 between the first electrode plate 210 and the second electrode plate 220, thereby alleviating the problem that the electrode plate pierces the separator 230 at the termination end, and improving the safety of the battery cell 200.

In some embodiments, the second insulation piece 250 includes a termination portion 251. The termination portion 251 is a part by which the second insulation piece 250 extends beyond the first winding termination end 2141 along the first direction X. The length of the termination portion 251 along the first direction X is P mm. Along the winding direction R, the second electrode plate 220 includes a second winding termination section. The length of the second winding termination section is N mm, and the length of the first winding termination section 214 is M mm, satisfying: N - M ≥ P. The length of the second winding termination section is greater than the length of the first winding termination section 214. The length by which the second winding termination section extends beyond the first winding termination section 214 is greater than or equal to the length of the termination portion 251 of the second insulation piece 250. In this way, after the first electrode plate 210, the separator 230, and the second electrode plate 220 are wound along the winding direction R to form an electrode assembly, the ion intercalation space of the second electrode plate 220 is increased, thereby alleviating the lithium plating of the second electrode plate 220, and improving the capacity and charge-and-discharge performance of the battery cell 200. Understandably, the ion intercalation space is an intercalation space of lithium ions.

Referring to FIG. 3, in some embodiments, along the winding direction R, the second electrode plate 220 includes a second winding start section 221 located on the first layer at the innermost turn of the electrode assembly. The length of the second winding start section 221 is B mm, the length of the first winding start section 211 is A mm, and the length of the first portion 241 is C mm, satisfying: 5 mm ≥ B - A ≥ C. The length of the second winding start section 221 is greater than the length of the first winding start section 211. The length by which the second winding start section 221 extends beyond the first winding start section 211 is greater than or equal to the length of the first portion 241 of the first insulation piece 240 and is not greater than 5 mm. In this way, after the first electrode plate 210, the separator 230, and the second electrode plate 220 are wound along the winding direction R to form an electrode assembly, the hollow area of the second electrode plate 220 in the thickness direction of the battery cell 200 is reduced, thereby alleviating the lithium plating of the second electrode plate 220.

In some embodiments, the isolation layer 245 includes a layer formed by at least one of the following: polyolefin, polyacrylonitrile, polyol ester, polyamide, polyurethane, polyethylene terephthalate, and a composite containing at least one of the polyolefin, the polyacrylonitrile, the polyol ester, the polyamide, the polyurethane, or the polyethylene terephthalate. Such materials are polymer materials with good mechanical properties and electrical insulation properties, and are of relatively high chemical stability.

The first bonding layer 244 and/or the second bonding layer 246 includes a layer formed by at least one of the following: polyolefin, polyurethane, polyacrylate, organosilicon, rubber, and a composite containing at least one of the polyolefin, the polyurethane, the polyacrylate, the organosilicon, or the rubber. Such substances used as materials of the first bonding layer 244 and/or the second bonding layer 246 are highly penetrative, and provide high bonding strength after polymerization.

In addition, a person skilled in the art can make other variations to this application without departing from the technical concept of this application. The variations made based on the technical concept of this application still fall within the scope of disclosure of this application.

## Claims

1. A battery cell, comprising:
a first electrode plate;
a second electrode plate, wherein a polarity of the second electrode plate is opposite to a polarity of the first electrode plate; and
a separator, wherein the separator is disposed between the first electrode plate and the second electrode plate, and the first electrode plate, the separator, and the second electrode plate are wound along a winding direction to form an electrode assembly,
**characterized in that** along the winding direction, the first electrode plate comprises a first winding start section located on a first layer at an innermost turn of the electrode assembly, the first winding start section comprises a first winding start end, and the battery cell further comprises:
a first insulation piece, wherein the first insulation piece is disposed on both sides of a part of the first winding start section, and extends beyond the first winding start end along a first direction, a part extending beyond is a first portion of the first insulation piece, and the first direction is a length direction of the first electrode plate.

2. The battery cell according to claim 1, **characterized in that** the first winding start section is provided with a notch, and the first insulation pieces at least partially cover the notch and are bonded to each other at the notch.

3. The battery cell according to claim 1, **characterized in that** a length of the first portion is C mm, satisfying: 30 ≥ C ≥ 1.5.

4. The battery cell according to any one of claims 1 to 3, **characterized in that** along the winding direction, the second electrode plate comprises a second winding start section located on the first layer at the innermost turn of the electrode assembly, a length of the second winding start section is B mm, a length of the first winding start section is A mm, and a length of the first portion is C mm, satisfying: 5 ≥ B - A ≥ C.

5. The battery cell according to any one of claims 1 to 3, **characterized in that** along the winding direction, a length of the first winding start section is A mm, a length of the first portion is C mm, and a width of the electrode assembly is W mm, satisfying: C + A ≤ W.

6. The battery cell according to any one of claims 1 to 3, **characterized in that** the first insulation piece further comprises a second portion; the second portion is a part, bonded to the first winding start section, of the first insulation piece; a length of the second portion is D mm, and a length of the first portion is C mm, satisfying: 10C ≥ D ≥ 3C.

7. The battery cell according to any one of claims 1 to 3, **characterized in that** the first electrode plate comprises a first current collector and active material layers disposed on both sides of the first current collector, and along a thickness direction of the first winding start section, a thickness of the first insulation piece is E µm, a thickness of the first current collector is F µm, and a thickness of the separator is G µm, satisfying: E + G ≥ 3F.

8. The battery cell according to claim 7, **characterized in that** 20 ≤ E ≤ 60.

9. The battery cell according to any one of claims 1 to 3, **characterized in that** the first insulation piece further comprises a third portion, the third portion is a part by which the first insulation piece extends beyond the first winding start end along a third direction, the third direction is a width direction of the first electrode plate, and a length of the third portion along the third direction is K mm, satisfying: K ≤ 2.

10. The battery cell according to claim 1, **characterized in that** the first insulation piece comprises a first bonding layer and an isolation layer; the first bonding layer is disposed on one side, close to the first winding start section, of the isolation layer; and the first insulation piece is bonded and fixed to the first winding start section by the first bonding layer.

11. The battery cell according to any one of claims 1 to 3, **characterized in that** the first insulation piece comprises a first bonding layer, an isolation layer, and a second bonding layer; the second bonding layer is disposed on one side, away from the first winding start section, of the isolation layer; and the first insulation piece is bonded and fixed to the separator by the second bonding layer.

12. The battery cell according to claim 10, **characterized in that** the first insulation piece is a hot-melt adhesive.

13. The battery cell according to any one of claims 1 to 3, **characterized in that** no blank foil region is provided in the first winding start section.

14. The battery cell according to any one of claims 1 to 3, **characterized in that** the battery cell further comprises a second insulation piece, and along the winding direction, the first electrode plate further comprises a first winding termination section located at a termination end of an outermost turn of the electrode assembly, the second insulation piece is affixed on both sides of the first winding termination section, the first winding termination section comprises a first winding termination end, and the second insulation piece extends beyond the first winding termination end along the first direction.

15. The battery cell according to claim 14, **characterized in that** the second insulation piece comprises a termination portion, the termination portion is a part by which the second insulation piece extends beyond the first winding termination end along the first direction, and a length of the termination portion along the first direction is P mm; and
along the winding direction, the second electrode plate comprises a second winding termination section, a length of the second winding termination section is N mm, and a length of the first winding termination section is M mm, satisfying: N - M ≥ P.

16. The battery cell according to claim 11, **characterized in that** the isolation layer comprises a layer formed by at least one of the following:
polyolefin, polyacrylonitrile, polyol ester, polyamide, polyurethane, polyethylene terephthalate, and a composite containing at least one of the polyolefin, the polyacrylonitrile, the polyol ester, the polyamide, the polyurethane, or the polyethylene terephthalate; and
the first bonding layer and/or the second bonding layer comprises a layer formed by at least one of the following:
polyolefin, polyurethane, polyacrylate, organosilicon, rubber, and a composite containing at least one of the polyolefin, the polyurethane, the polyacrylate, the organosilicon, or the rubber.

17. A secondary battery, **characterized in that** the secondary battery comprises the battery cell according to any one of claims 1 to 16.
